# EUROPEAN PATENT SPECIFICATION

(11) **EP 3 202 725 B1**
(45) Date of publication and mention of the grant of the patent: **14.08.2019**
(21) Application number: 15846093.1
(22) Date of filing: 29.09.2015
(51) Int. Cl.: C03C 27/06, E06B 3/66, E06B 3/663, E06B 3/677

(54) **METHOD FOR MANUFACTURING GLASS PANEL UNIT**
VERFAHREN ZUR HERSTELLUNG EINER GLASSCHEIBENEINHEIT
PROCÉDÉ DE FABRICATION D'UN PANNEAU DE VERRE

(30) Priority: 30.09.2014 JP 2014200978
(43) Date of publication of application: 09.08.2017
(73) Proprietor: Panasonic Intellectual Property Management Co., Ltd., Osaka-shi, Osaka 540-6207 (JP)
(72) Inventor: ABE, Hiroyuki, Osaka-shi Osaka 540-6207 (JP); URIU, Eiichi, Osaka-shi Osaka 540-6207 (JP); ISHIBASHI, Tasuku, Osaka-shi Osaka 540-6207 (JP); HASEGAWA, Kenji, Osaka-shi Osaka 540-6207 (JP)
(74) Representative: Müller-Boré & Partner Patentanwälte PartG mbB
(86) International application number: PCT/JP2015/004921
(87) International publication number: WO 2016/051762

(56) References cited:
- WO-A1-2013/172034
- WO-A1-2013/172034
- JP-A- 2001 206 740
- JP-A- 2004 149 343
- JP-A- 2008 063 158
- JP-A- 2013 088 036
- US-A1- 2015 068 665

## Description

### Technical Field

The present invention relates to methods for manufacturing glass panel unit.

### Background Art

Document 1 (WO 2013/172034 A1) discloses a multiple glass pane. The multiple glass pane disclosed in Document 1 has a reduced pressure space formed between a pair of glass plates.

The reduced pressure space is made by evacuating a space between the pair of glass plates with a vacuum pump. To evacuate the space between the pair of glass plates with the vacuum pump, it is necessary to form an outlet in one of the pair of glass panels in advance and connect the outlet to an inlet of the vacuum pump with an evacuation pipe.

In Document 1, subsequent to the evacuation the space is divided by a region forming member placed inside the space to form a partial region not including the outlet. After that, the pair of glass plates are cut to separate the partial region. As a result, a multiple glass pane devoid of an outlet and an evacuation pipe can be produced. Therefore several cutting lines are required such that an unnecessary part including a gas passage space cannot be removed at once by cutting the completed assembly along only one straight line.

According to Document 1, heating the region forming member is necessary to form the partial region. However, heating the region forming member may result in emission of gas from the region forming member. After formation of the partial region, it is very difficult to improve the degree of vacuum of the partial region by use of the vacuum pump and therefore the degree of vacuum of the partial region is likely to become worse due to emission of gas from the region forming member. Hence, in some cases multiple glass panes may fail to have desired thermal insulating properties.

### Summary of Invention

In consideration of the above insufficiency, an object would be to provide a method for manufacturing a glass panel unit having a smaller number of cutting steps such that costs and time can be reduced.

The method for manufacturing glass panel unit of one aspect according to the present invention, includes: an assembling step of preparing a temporary assembly including: a first glass substrate; a second glass substrate placed opposite the first glass substrate; a frame placed between the first glass substrate and the second glass substrate to hermetically bond the first glass substrate and the second glass substrate to each other; an inside space enclosed by the first glass substrate, the second glass substrate, and the frame; a partition dividing the inside space into a first space and a second space; a gas passage interconnecting the first space and the second space; and an outlet interconnecting the second space and an outside space; a hermetically enclosing step of obtaining a completed assembly by: converting the first space into an evacuated space by evacuating the first space through the gas passage, the second space, and the outlet and changing a shape of the partition to close the gas passage to form a separator so that part of the frame corresponding to the evacuated space and the separator constitute a seal hermetically bonding the first glass substrate and the second glass substrate so as to enclose the evacuated space; and a removing step of removing part including the second space from the completed assembly by cutting the completed assembly along a straight line to obtain a glass panel unit which is a predetermined part including the evacuated space.

### Brief Description of Drawings

**FIG. 1** is a schematic section of the glass panel unit of the first embodiment.
**FIG. 2** is a schematic plan of the glass panel unit of the first embodiment.
**FIG. 3** is a schematic section of the temporary assembly of the glass panel unit of the first embodiment.
**FIG. 4** is a schematic plan of the temporary assembly in the first embodiment.
**FIG. 5** is a schematic plan of the completed assembly of the glass panel unit of the first embodiment.
**FIG. 6** is an explanatory view of the method for manufacturing the glass panel unit of the first embodiment.
**FIG. 7** is another explanatory view of the method for manufacturing the glass panel unit of the first embodiment.
**FIG. 8** is another explanatory view of the method for manufacturing the glass panel unit of the first embodiment.
**FIG. 9** is another explanatory view of the method for manufacturing the glass panel unit of the first embodiment.
**FIG. 10** is another explanatory view of the method for manufacturing the glass panel unit of the first embodiment.
**FIG. 11** is another explanatory view of the method for manufacturing the glass panel unit of the first embodiment.
**FIG. 12** is a schematic section of the glass panel unit of the second embodiment.
**FIG. 13A** is a schematic section of the completed assembly of the third embodiment, and **FIG. 13B** is a schematic perspective view of the second glass substrate of the temporary assembly of the third embodiment.

### Description of Embodiments

The following first embodiment and the second embodiment relate to methods for manufacturing glass panel unit, and particularly to a method for manufacturing thermally insulating glass panel unit.

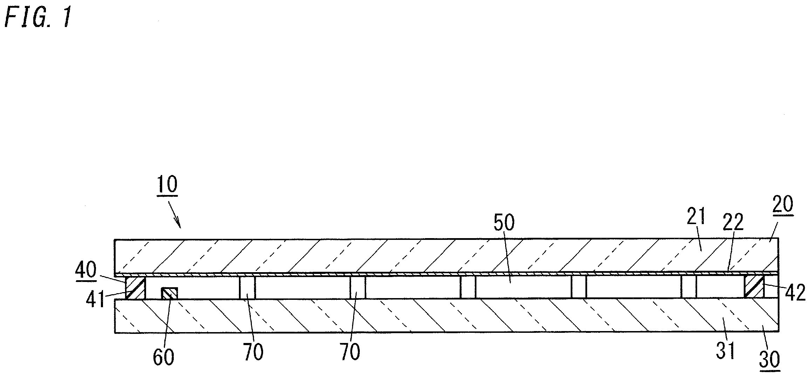

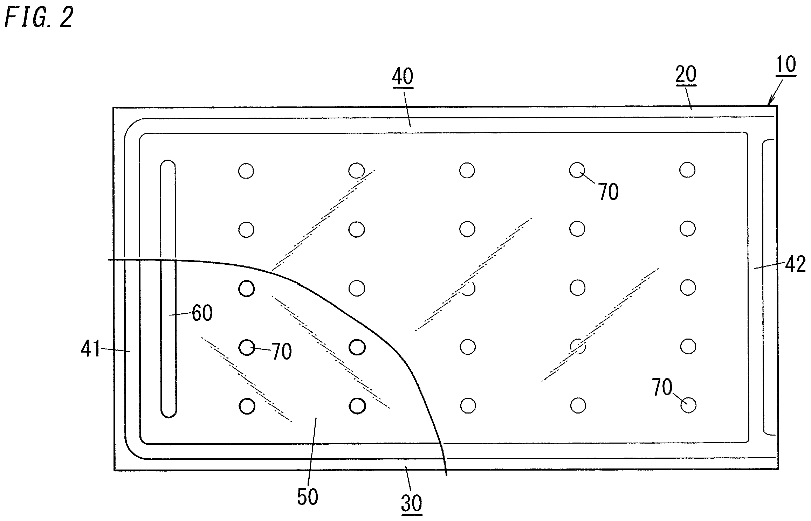

**FIG. 1** and **FIG. 2** show a glass panel unit (a finished product of glass panel unit) **10** of the first embodiment. The glass panel unit **10** of the first embodiment is a vacuum insulated glass unit. The vacuum insulated glass unit is a type of multiple glass panels including at least one pair of glass panels, and includes an evacuated space between the pair of glass panels.

The glass panel unit **10** of the first embodiment includes a first glass panel **20,** a second glass panel **30,** a seal **40,** an evacuated space **50,** a gas adsorbent **60,** and multiple spacers **70.**

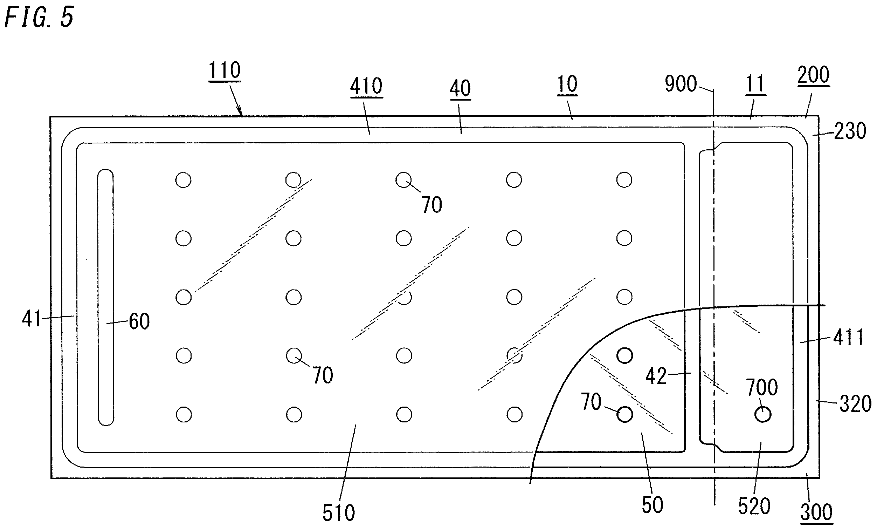

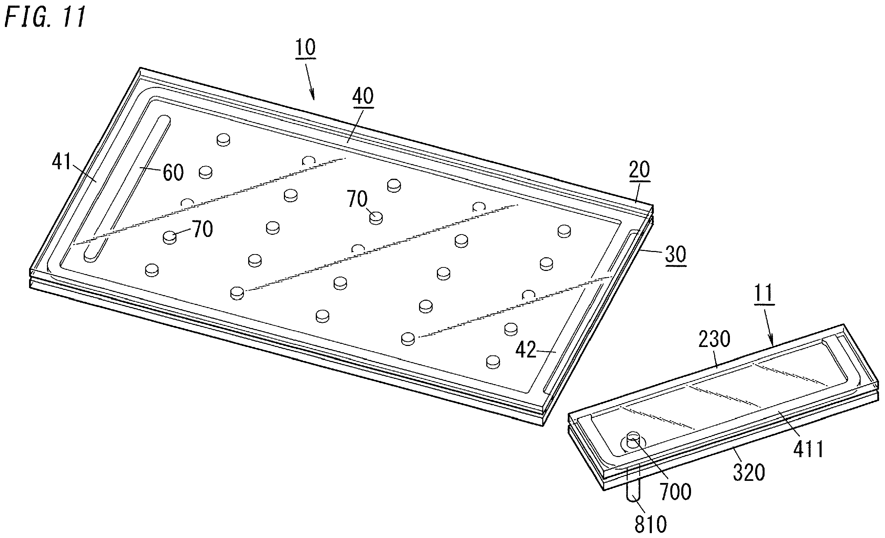

The glass panel unit **10** of the first embodiment is a predetermined part separated from a completed assembly **110** shown in **FIG. 5****.** In more detail, the glass panel unit **10** of the first embodiment is defined as remaining part obtained by removing an unnecessary part **11** from the completed assembly **110,** as shown in **FIG. 11****.**

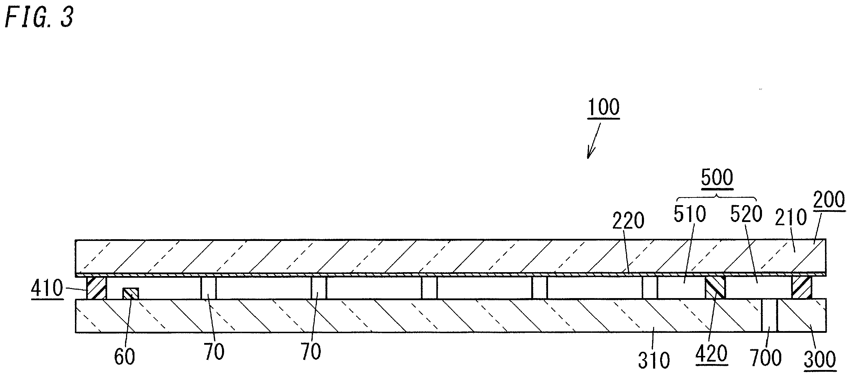

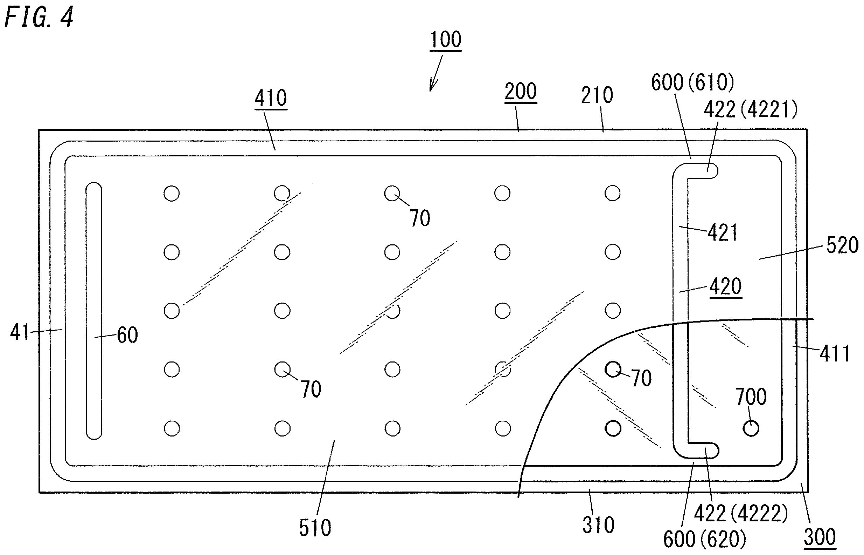

The completed assembly **110** is obtained by subjecting a temporary assembly **100** shown in **FIG. 3** and **FIG. 4** to a predetermined process.

The temporary assembly **100** includes a first glass substrate **200,** a second glass substrate **300,** a frame **410,** an inside space **500,** a partition **420,** a gas passage **600,** an outlet **700,** a gas adsorbent **60,** and multiple spacers **70.**

The first glass substrate **200** includes a glass plate **210** determining a plan shape of the first glass substrate **200,** and a coating **220.**

The glass plate **210** is a rectangular flat plate and includes a first face (lower face in **FIG. 3**) and a second face (upper face in **FIG. 3**) in a thickness direction which are parallel to each other. Each of the first face and the second face of the glass plate **210** is a flat face. Examples of material of the glass plate **210** may include soda lime glass, high strain point glass, chemically strengthened glass, non-alkaline glass, quartz glass, neoceram, and physically strengthened glass.

The coating **220** is formed on the first flat face of the glass plate **210.** The coating **220** is an infrared reflective film. Note that, the coating **220** is not limited to such an infrared reflective film but may be a film with desired physical properties.

The second glass substrate **300** includes a glass plate **310** determining a plan shape of the second glass substrate **300.** The glass plate **310** is a rectangular flat plate and includes a first face (upper face in **FIG. 3**) and a second face (lower face in **FIG. 3**) in a thickness direction which are parallel to each other. Each of the first face and the second face of the glass plate **310** is a flat face.

The glass plate **310** has the same plan shape and plan size as the glass plate **210** (in other words, the second glass substrate **300** has the same plan shape as the first glass substrate 200). Further, the glass plate **310** has the same thickness as the glass plate **210.** Examples of material of the glass plate **310** may include soda lime glass, high strain point glass, chemically strengthened glass, non-alkaline glass, quartz glass, neoceram, and physically strengthened glass.

The second glass substrate **300** includes the glass plate **310** only. In other words, the glass plate **310** forms the second glass substrate **300** by itself. The second glass substrate **300** is placed opposite the first glass substrate **200.** In more detail, the first glass substrate **200** and the second glass substrate **300** are arranged so that the first face of the glass plate **210** and the first face of the glass plate **310** face and parallel to each other.

The frame **410** is placed between the first glass substrate **200** and the second glass substrate **300** to hermetically bond the first glass substrate **200** and the second glass substrate **300** to each other. Thereby, the inside space **500** enclosed by the frame **410,** the first glass substrate **200,** and the second glass substrate **300** is formed.

The frame **410** is formed of thermal adhesive (first thermal adhesive with a first softening point). Examples of the first thermal adhesive may include glass frit. Examples of the glass frit may include low-melting-point glass frit. Examples of the low-melting-point glass frit may include bismuth-based glass frit, lead-based glass frit, and vanadium-based glass frit.

The frame **410** has a rectangular frame shape. The frame **410** has the same plan shape as each of the glass plates **210** and **310,** but the frame **410** has a smaller plan size than each of the glass plates **210** and **310.** The frame **410** is formed to extend along an outer periphery of the second glass substrate **300.** In other words, the frame **410** is formed to cover an almost entire region on the second glass substrate **300.**

The first glass substrate **200** and the second glass substrate **300** are hermetically bonded with the frame **410** by once melting the first thermal adhesive of the frame **410** at a predetermined temperature (first melting temperature) **Tm1** equal to or higher than the first softening point.

The partition **420** is placed inside the inside space **500.** The partition **420** divides the inside space **500** into a first space **510** and a second space **520.** The first space **510** is a hermetically enclosed space to be hermetically enclosed to form the evacuated space **50** when the glass panel unit **10** is completed. The second space **520** serves as a gas passage space connected to the outlet **700.** The partition **420** is formed between a first end (right end in **FIG. 4**) and a center of the second glass substrate **300** in a lengthwise direction (left and right direction in **FIG. 4**) of the second glass substrate **300** so that the first space **510** is larger than the second space **520.**

The partition **420** includes a wall part **421** and a pair of closing parts **422** (a first closing part **4221** and a second closing part **4222**). The wall part **421** is formed to extend along a width direction (upward and downward direction in **FIG. 4**) of the second glass substrate **300.** Note that, the wall part **421** has opposite ends in a lengthwise direction not in contact with the frame **410.** The pair of closing parts **422** extends from the opposite ends in the lengthwise direction of the wall part **421** toward the first end in the lengthwise direction of the second glass substrate **300.**

The partition **420** is formed of thermal adhesive (second thermal adhesive with a second softening point). Examples of the second thermal adhesive may include glass frit. Examples of the glass frit may include low-melting-point glass frit. Examples of the low-melting-point glass frit may include bismuth-based glass frit, lead-based glass frit, and vanadium-based glass frit. The second thermal adhesive is same as the first thermal adhesive, and the second softening point is equal to the first softening point.

The gas passage **600** interconnects the first space **510** and the second space **520** in the inside space **500.** The gas passage **600** includes a first gas passage **610** and a second gas passage **620.** The first gas passage **610** is a space formed between the first closing part **4221** and part of the frame **410** facing the first closing part **4221.** The second gas passage **620** is a space formed between the second closing part **4222** and part of the frame **410** facing the second closing part **4222.** In the first embodiment, a plurality of the gas passages **600** are formed.

The outlet **700** is a hole interconnecting the second space **520** and an outside space. The outlet **700** is used for evacuating the first space **510** by way of the second space **520** and the gas passage **600.** The outlet **700** is formed in the second glass substrate **300** to interconnect the second space **520** and the outside space. In more detail, the outlet **700** is positioned in a corner of the second glass substrate **300.**

The gas adsorbent **60** is placed inside the first space **510.** In more detail, the gas adsorbent **60** has an elongated shape, and is formed on a second end (left end in **FIG. 5**) in the lengthwise direction of the second glass substrate **300** to extend along the width direction of the second glass substrate **300.** In summary, the gas adsorbent **60** is placed on one end of the first space **510** (the evacuated space **50**). According to this arrangement, the gas adsorbent **60** can be unlikely to be perceived. Further, the gas adsorbent **60** is positioned away from the partition **420** and the gas passage **600.** Hence, it is possible to lower a probability that the gas adsorbent **60** prevents evacuation of the first space **510.**

The gas adsorbent **60** is used to adsorb unnecessary gas (for example, residual gas). The unnecessary gas may include gas emitted from the frame **410** and the partition **420** when heated.

The gas adsorbent **60** includes a getter. The getter is a substance having properties of adsorbing molecules smaller than a predetermined size. The getter may be an evaporative getter. The evaporative getter has properties of desorbing adsorbed molecules when having a temperature equal to or higher than a predetermined temperature (activation temperature). Therefore, even if the adsorbability of the evaporative getter has been decreased, the adsorbability of the evaporative getter can be recovered by heating the evaporative getter to a temperature equal to or higher than the activation temperature. Examples of the evaporative getter may include zeolite and ion-exchanged zeolite (for example, copper ion-exchanged zeolite).

The gas adsorbent **60** includes a powder of this getter. In more detail, the gas adsorbent **60** may be formed by applying a solution prepared by dispersing a powder of the getter therein. In this case, the gas adsorbent **60** can be downsized. Therefore, the gas adsorbent **60** can be placed even if the evacuated space **50** is small.

The multiple spacers **70** are used to keep a predetermined interval between the first glass substrate **200** and the second glass substrate **300.** In other words, the multiple spacers **70** are used to keep a distance between the first glass panel **20** and the second glass panel **30** to a desired value.

The multiple spacers **70** are placed inside the first space **510.** In more detail, the multiple spacers **70** are placed at individual intersections of an imaginary rectangular lattice. For example, an interval between the multiple spacers **70** is 2 cm. Note that, sizes of the spacers **70,** the number of spacers **70,** intervals between the spacers **70,** and pattern of arrangement of the spacers **70** may be appropriately determined.

Each spacer **70** has a solid cylindrical shape with a height almost equal to the aforementioned predetermined interval. For example, each spacer **70** has a diameter of 1 mm and a height of 100 µm. Note that, each spacer **70** may have a desired shape such as a solid prismatic shape and a spherical shape.

Each spacer **70** is made of light-transmissive material. Note that, each spacer **70** may be made of opaque material, providing that it is sufficiently small. Material of the spacers **70** is selected so that deformation of the spacers **70** does not occur during a first melting step, an evacuating step, and a second melting step which are described later. For example, the material of the spacers **70** is selected to have a softening point (softening temperature) higher than the first softening point of the first thermal adhesive and the second softening point of the second thermal adhesive.

The aforementioned temporary assembly **100** is subjected to the above predetermined process to obtain the completed assembly **110.**

The above predetermined process includes converting the first space **510** into the evacuated space **50** by evacuating the first space **510** by way of the gas passage **600,** the second space **520,** and the outlet **700** at a predetermined temperature (an evacuation temperature) Te. The evacuation temperature Te is higher than the activation temperature of the getter of the gas adsorbent **60.** Consequently, evacuation of the first space **510** and recovery of the adsorbability of the getter can be performed simultaneously.

The above predetermined process further includes forming the seal **40** enclosing the evacuated space **50** by forming a separator **42** for closing the gas passage **600** by changing a shape of the partition **420** (see **FIG. 5**). The partition **420** includes the second thermal adhesive. Therefore, the separator **42** can be formed by changing the shape of the partition **420** by once melting the second thermal adhesive at a predetermined temperature (a second melting temperature) **Tm2** equal to or higher than the second softening point. Note that, the first melting temperature **Tm1** is lower than the second melting temperature **Tm2.** Consequently, it is possible to prevent the gas passage **600** from being closed due to deformation of the partition **420** in bonding the first glass substrate **200** and the second glass substrate **300** with the frame **410.**

The partition **420** is changed in shape so that the first closing part **4221** closes the first gas passage **610** and the second closing part **4222** closes the second gas passage **620.** The separator **42,** which is obtained by changing the shape of the partition **420** as described above, separates (spatially) the evacuated space **50** from the second space **520.** The separator (second part) **42** and part (first part) **41** of the frame **410** corresponding to the evacuated space **50** constitute the seal **40** enclosing the evacuated space **50.**

The completed assembly **110** obtained in the aforementioned manner includes, as shown in **FIG. 5****,** the first glass substrate **200,** the second glass substrate **300,** the seal **40,** the evacuated space **50,** the second space **520,** the gas adsorbent **60,** and the multiple spacers **70.**

The evacuated space **50** is obtained by evacuating the first space **510** by way of the second space **520** and the outlet **700** as described above. In other words, the evacuated space **50** is defined as the first space **510** with a degree of vacuum equal to or lower than a predetermined value. The predetermined value may be 0.1 Pa, for example. The evacuated space **50** is hermetically enclosed by the first glass substrate **200,** the second glass substrate **300,** and the seal **40** completely and thus is separated from the second space **520** and the outlet **700.**

The seal **40** encloses the evacuated space **50** completely and bonds the first glass substrate **200** and the second glass substrate **300** to each other hermetically. The seal **40** has a rectangular frame shape, and includes the first part **41** and the second part **42.** The first part **41** is part of the frame **410** corresponding to the evacuated space **50.** In other words, the first part **41** is part of the frame **410** facing the evacuated space **50.** The first part **41** has an almost U-shape, and serves as three of four sides of the seal **40.** The second part **42** is a separator formed by changing the shape of the partition **420.** The second part **42** has an I-shape, and serves as a remaining one of the four sides of the seal **40.**

Thus-obtained completed assembly **110** is cut along a cutting line **900** shown in **FIG. 5****,** and thereby divided into part (glass panel unit) **10** including the evacuated space **50** and other part (unnecessary part) **11** including the second space **520** as shown in **FIG. 11****.**

As shown in **FIG. 1** and **FIG. 2****,** the glass panel unit **10** includes the first glass panel **20,** the second glass panel **30,** the seal **40,** the evacuated space **50,** the gas adsorbent **60,** and the multiple spacers **70.** Note that, the seal **40,** the evacuated space **50,** the gas adsorbent **60,** and the multiple spacers **70** are already described and thus hereinafter are not described in detail.

The first glass panel **20** is part of the first glass substrate **200** corresponding to the evacuated space **50.** The first glass panel **20** includes a body **21** determining a plan shape of the first glass panel **20,** and a coating **22.**

The body **21** is part of the glass plate **210** of the first glass substrate **200** corresponding to the evacuated space **50.** The body **21** is of the same material as the glass plate **210.** The body **21** is rectangular and includes a first face (lower face in **FIG. 1**) and a second face (upper face in **FIG. 1**) in a thickness direction which are parallel to each other. Each of the first face and the second face of the body **21** is a flat face.

The coating **22** is formed on the first face of the body **21.** The coating **22** is part of the coating **220** of the first glass substrate **200** corresponding to the evacuated space **50.** The coating **22** has the same physical properties as the coating **220.**

The second glass panel **30** is part of the second glass substrate **300** corresponding to the evacuated space **50.** The outlet **700** for forming the evacuated space **50** is present in the part **320** of the second glass substrate **300** corresponding to the second space **520,** and the evacuation pipe **810** is connected to the part **320.** Therefore, the outlet **700** is not present in the second glass panel **30.**

The second glass panel **30** includes a body **31** determining a plan shape of the second glass panel **30.** The body **31** is part of the glass plate **310** of the second glass substrate **300** corresponding to the evacuated space **50.** Thus, the body **31** is of the same material as the glass plate **310.**

The body **31** is rectangular and includes a first face (upper face in **FIG. 1**) and a second face (lower face in **FIG. 1**) in a thickness direction which are parallel to each other. Each of the first face and the second face of the body **31** is a flat face. The body **31** has the same plan shape as the body **21** (in other words, the second glass panel **30** has the same plan shape as the first glass panel **20**).

The second glass panel **30** includes the body **31** only. In other words, the body **31** forms the second glass panel **30** by itself.

The first glass panel **20** and the second glass panel **30** are arranged so that the first face of the body **21** and the first face of the body **31** face and parallel to each other. In other words, the second face of the body **21** is directed outward from the glass panel unit **10,** and the first face of the body **21** is directed inward of the glass panel unit **10.** Further, the first face of the body **31** is directed inward of the glass panel unit **10,** and the second face of the body **31** is directed outward from the glass panel unit **10.**

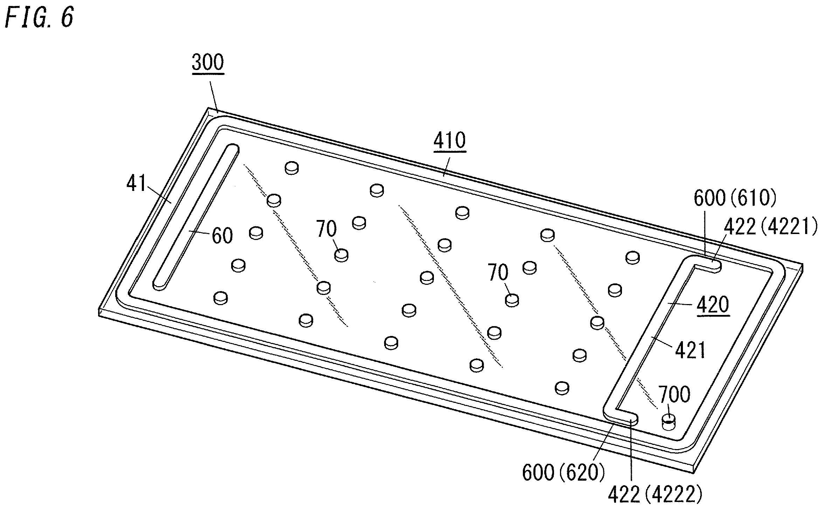

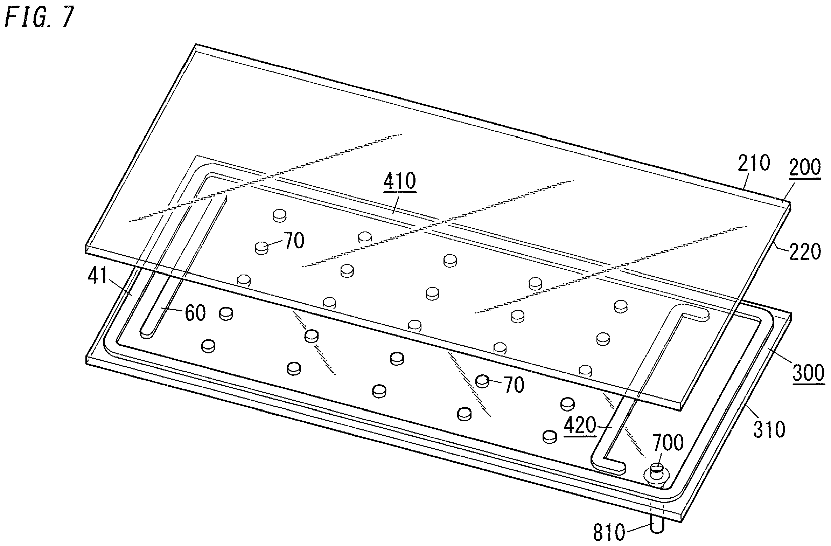

Hereinafter, a method for manufacturing the glass panel unit **10** of the first embodiment is described with reference to **FIG. 6** to **FIG. 11****.**

The method for manufacturing the glass panel unit **10** of the first embodiment includes a preparation step, an assembling step, a hermetically enclosing step, and a removing step. Note that, the preparation step can be omitted.

The preparation step is a step of forming the first glass substrate **200,** the second glass substrate **300,** the frame **410,** the partition **420,** the inside space **500,** the gas passage **600,** the outlet **700,** and the gas adsorbent **60,** for the purpose of producing the temporary assembly **100.** The preparation step includes first to sixth steps. Note that, the order of the second to sixth steps may be modified.

The first step is a step (substrate formation step) of forming the first glass substrate **200** and the second glass substrate **300.** For example, in the first step, the first glass substrate **200** and the second glass substrate **300** are produced. The first step may include cleaning the first glass substrate **200** and the second glass substrate **300** if necessary.

The second step is a step of forming the outlet **700.** In the second step, the outlet **700** is formed in the second glass substrate **300.** Further, in the second step, the second glass substrate **300** is cleaned if necessary.

The third step is a step (sealing material formation step) of forming the frame **410** and the partition **420.** In the third step, the material (the first thermal adhesive) of the frame **410** and the material (the second thermal adhesive) of the partition **420** are applied on to the second glass substrate **300** (the first face of the glass plate **310**) with a dispenser or the like.

The material of the partition **420** is applied on the second glass substrate **300** from a region reserved for one end of the opposite ends (the closing parts **422** serving as the first closing part **4221** and the second closing part **4222**) of the wall part **421** to a region reserved for the other end of the opposite ends of the wall part **421.** In this regard, it is difficult to adjust distances of start and end positions of application of material of the wall part **421** from the frame **410.** The width of the gas passage **600** formed between the end of the wall part **421** formed by application and the frame **410** is determined by the distance of the end from the frame **410.** Therefore, this distance is required to be in a predetermined range. For this reason, the closing parts **422** are formed at the opposite ends of the wall part **421** so as to extend from the opposite ends in the lengthwise direction of the wall part **421** in a direction across the lengthwise direction. In the first embodiment, the closing part **422** extends toward the first end in the lengthwise direction of the second glass substrate **300,** but may extend toward the opposite end of the second glass substrate **300** from the first end.

The material of the frame **410** and the material of the partition **420** are dried and calcined. For example, the second glass substrate **300** where the material of the frame **410** and the material of the partition **420** are applied is heated at 480 °C for 20 minutes. Note that, the first glass substrate **200** may be heated together with the second glass substrate **300.** In other words, the first glass substrate **200** may be heated under the same condition (at 480 °C for 20 minutes) as the second glass substrate **300.** By doing so, it is possible to reduce a difference in degree of warp between the first glass substrate **200** and the second glass substrate **300.**

The fourth step is a step (spacer formation step) of forming the spacers **70.** The fourth step may include placing the multiple spacers **70** in individual predetermined locations on the second glass substrate **300** with a chip mounter. Note that, the multiple spacers **70** are formed in advance. Alternatively, the multiple spacers **70** may be formed by use of photolithography techniques and etching techniques. In this case, the multiple spacers **70** may be made of photocurable material or the like. Alternatively, the multiple spacers **70** may be formed by use of known thin film formation techniques.

The fifth step is a step (gas adsorbent formation step) of forming the gas adsorbent **60.** In the fifth step, a solution where a power of the getter is dispersed is applied to a predetermined location on the second glass substrate **300** and then dried to thereby form the gas adsorbent **60.**

When a process from the first step to the fifth step is completed, the second glass substrate **300** is obtained, on which the frame **410,** the partition **420,** the gas passage **600,** the outlet **700,** the gas adsorbent **60,** and the multiple spacers **70** are formed as shown in **FIG. 6****.**

The sixth step is a step (placing step) of placing the first glass substrate **200** and the second glass substrate **300.** In the sixth step, the first glass substrate **200** and the second glass substrate **300** are placed so that the first face of the glass plate **210** and the first face of the glass plate **310** face and are parallel to each other.

The assembling step is a step of preparing the temporary assembly **100.** In more detail, in the assembling step, the temporary assembly **100** is prepared by bonding the first glass substrate **200** and the second glass substrate **300** to each other. In other words, the assembling step may be referred to as a step (first melting step) of hermetically bonding the first glass substrate **200** and the second glass substrate **300** to each other with the frame **410.**

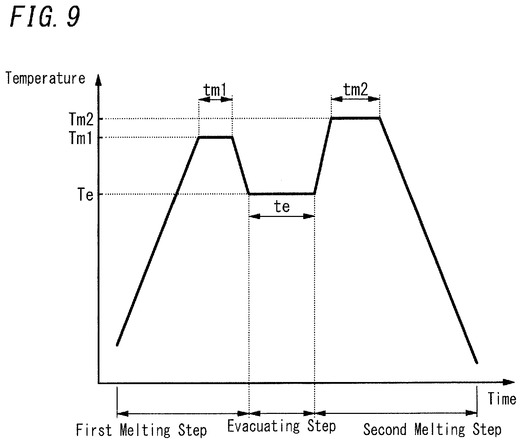

In the first melting step, the first thermal adhesive is melted once at the predetermined temperature (the first melting temperature) **Tm1** equal to or higher than the first softening point and thereby the first glass substrate **200** and the second glass substrate **300** are hermetically bonded to each other. In more detail, the first glass substrate **200** and the second glass substrate **300** are placed in a furnace and heated at the first melting temperature **Tm1** only for predetermined time (the first melting time) **tm1** (see **FIG. 9**).

The first melting temperature **Tm1** and the first melting time **tm1** are selected so that the first glass substrate **200** and the second glass substrate **300** are hermetically bonded to each other with the first thermal adhesive of the frame **410** but the gas passage **600** is not closed by the partition **420.** In other words, a lower limit of the first melting temperature **Tm1** is equal to the first softening point, and an upper limit of the first melting temperature **Tm1** is however selected so as not to cause the partition **420** to close the gas passage **600.** For example, when the first softening point and the second softening point are 434 °C, the first melting temperature **Tm1** is set to 440 °C. Further, the first melting time **tm1** may be 10 minutes, for example. Note that, in the first melting step, the frame **410** may emit gas. However such gas can be adsorbed by the gas adsorbent **60.**

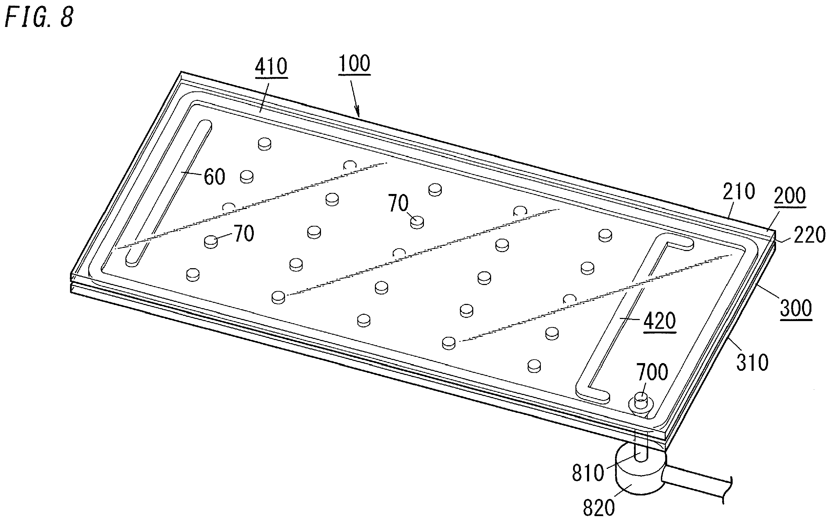

Through the aforementioned assembling step (the first melting step), the temporary assembly **100** shown in **FIG. 8** can be produced.

The hermetically enclosing step is a step of subjecting the temporary assembly **100** to the above predetermined process to obtain the completed assembly **110.** The hermetically enclosing step includes the evacuating step and a melting step (the second melting step). In other words, the evacuating step and the second melting step constitute the above predetermined process.

The evacuating step is a step of converting the first space **510** into the evacuated space **50** by evacuating it by way of the gas passage **600,** the second space **520,** and the outlet **700** at the predetermined temperature (the evacuation temperature) **Te.**

Evacuation can be done by a vacuum pump, for example. As shown in **FIG. 8****,** the vacuum pump is connected to the temporary assembly **100** with the evacuation pipe **810** and a sealing head **820.** The evacuation pipe **810** is bonded to the second glass substrate **300** so that an inside of the evacuation pipe **810** is connected to the outlet **700,** for example. The sealing head **820** is attached to the evacuation pipe **810,** and thereby an inlet of the vacuum pump is connected to the outlet **700.**

The first melting step, the evacuating step, and the second melting step are performed with the first glass substrate **200** and the second glass substrate **300** (the second glass substrate **300** where the frame **410,** the partition **420,** the gas passage **600,** the outlet **700,** the gas adsorbent **60,** and the multiple spacers **70** are formed) being left in the furnace. Therefore, the evacuation pipe **810** is bonded to the second glass substrate **300** before the first melting step at the latest.

In the evacuating step, the first space **510** is evacuated by way of the gas passage **600,** the second space **520,** and the outlet **700** at the evacuation temperature **Te** only for predetermined time (evacuation time) **te** (see **FIG. 9**).

The evacuation temperature **Te** is set to be higher than the activation temperature (for example, 350 °C) of the getter of the gas adsorbent **60,** and also is set to be lower than the first softening point and the second softening point (for example, 434 °C). For example, the evacuation temperature **Te** is 390 °C.

According to the above settings, deformation of the frame **410** and the partition **420** is unlikely to occur. Further, the getter of the gas adsorbent **60** is activated, and thus molecules (gas) adsorbed on the getter are desorbed from the getter. Such molecules (that is, gas) desorbed from the getter are discarded through the first space **510,** the gas passage **600,** the second space **520,** and the outlet **700.** Therefore, in the evacuating step, the adsorbability of the gas adsorbent **60** is recovered.

The evacuation time **te** is set to obtain the evacuated space **50** having a desired degree of vacuum (for example, a degree of vacuum equal to or lower than 0.1 Pa). For example, the evacuation time **te** is set to 120 minutes.

The second melting step is a step of forming the seal **40** enclosing the evacuated space 50 by changing the shape of the partition **420** to form the separator **42** closing the gas passage **600.** In the second melting step, the second thermal adhesive is melted once at the predetermined temperature (the second melting temperature) **Tm2** equal to or higher than the second softening point, and thereby the partition **420** is changed in shape to form the separator **42.** In more detail, the first glass substrate **200** and the second glass substrate **300** are heated at the second melting temperature **Tm2** for the predetermined time (the second melting time) **tm2** in the furnace (see **FIG. 9**).

The second melting temperature **Tm2** and the second melting time **tm2** are set to allow the second thermal adhesive to soften to form the separator **42** closing the gas passage **600.** A lower limit of the second melting temperature **Tm2** is equal to the second softening point (434 °C). Note that, differently from the first melting step, the purpose of the second melting step is to change the shape of the partition **420,** and consequently the second melting temperature **Tm2** is set to be higher than the first melting temperature (440 °C) **Tm1.** For example, the second melting temperature **Tm2** is set to 460 °C. Additionally, the second melting time **tm2** is, for example, 30 minutes.

When the separator **42** is formed, the evacuated space **50** is separated from the second space **520.** Hence, the vacuum pump cannot evacuate the evacuated space **50.** The frame **410** and the separator **42** are heated until the second melting step is finished, and therefore gas may be emitted from the frame **410** and the separator **42.** However, gas emitted from the frame **410** and the separator **42** is adsorbed on the gas adsorbent **60** inside the evacuated space **50.** Consequently, a decrease in the degree of vacuum of the evacuated space **50** can be suppressed. In summary, it is possible to suppress a decrease in the thermal insulating properties of the glass panel unit **10.**

Also in the first melting step, the frame **410** and the separator **42** are heated. Thus, the frame **410** and the separator **42** may emit gas. Gas emitted by the frame **410** and the separator **42** is adsorbed by the gas adsorbent **60,** and therefore the adsorbability of the gas adsorbent **60** may decrease due to the first melting step. However, in the evacuating step, the first space **510** is evacuated at the evacuation temperature **Te** equal to or higher than the activation temperature of the getter of the gas adsorbent **60** and thereby the adsorbability of the gas adsorbent **60** is recovered. Therefore, the gas adsorbent **60** can adsorb a sufficient amount of gas emitted from the frame **410** and the separator **42** in the second melting step. In other words, it is possible to avoid an undesired situation the gas adsorbent **60** fails to adsorb a sufficient amount of gas emitted from the frame **410** and the separator **42** and thus the degree of vacuum of the evacuated space **50** decreases.

Additionally, in the second melting step, evacuation of the first space **510** through the gas passage **600,** the second space **520,** and the outlet **700** is continued from the evacuating step. In other words, in the second melting step, the separator **42** closing the gas passage **600** is formed by changing the shape of the partition **420** at the second melting temperature **Tm2** while the first space **510** is evacuated through the gas passage **600,** the second space **520,** and the outlet **700.** By doing so, it is possible to more lower a probability that the degree of vacuum of the evacuated space **50** decreases during the second melting step. Note that, the second melting step does not necessarily include evacuating the first space **510** through the gas passage **600,** the second space **520,** and the outlet **700.**

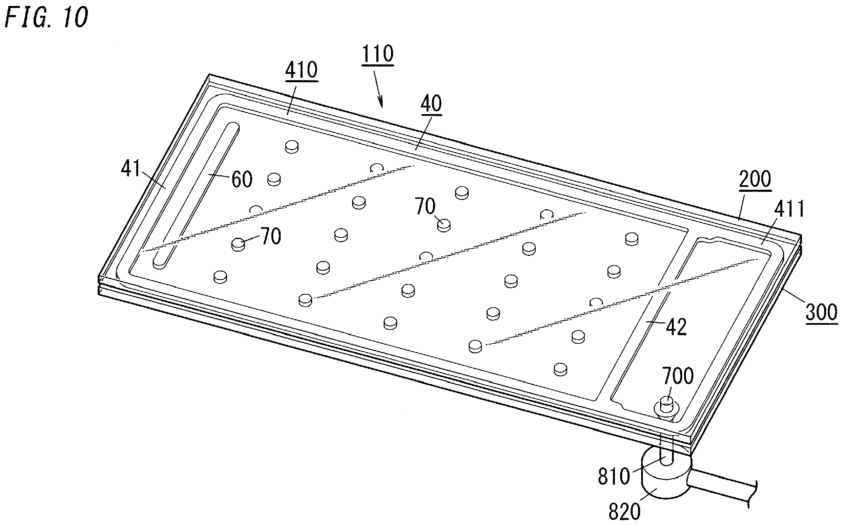

Through the aforementioned hermetically enclosing step, the completed assembly **110** shown in **FIG. 10** is produced.

The removing step is a step of obtaining the glass panel unit **10** which is part including the evacuated space **50,** by removing part **11** including the second space **520** from the completed assembly **110.** In more detail, the completed assembly **110** taken out from the furnace is cut along the cutting line **900** shown in **FIG. 5****,** and thereby is divided into predetermined part (glass panel unit) **10** including the evacuated space **50** and part (unnecessary part) **11** including the second space **520.** Additionally, the shape of the cutting line **900** is set to a shape of a straight line.

In a case where the cutting line **900** does not have a shape of a straight line but a shape of a bent line, to cut the completed assembly **110** not by hand but with a cutting device, such a cutting device is required to have a function capable of cutting along a bent line and thus is expensive. In a case of cutting the completed assembly **110** by hands, cutting along a bent line is more difficult for a worker than cutting along a straight line, and cutting along a bent line tends to cause a decrease in finish quality relative to cutting along a straight line. In consideration of these circumstances, in the first embodiment, the cutting line **900** has a shape of a straight line. Consequently, there may be no need to use the cutting device, or a worker can easily perform cutting by hands, or it is possible to suppress a decrease in finish quality.

Note that, the straight line may of course include a strict straight line and may include any line which is not straight in a strict sense providing that it can offer the aforementioned effects. Stated differently, the cutting line **900** may have a shape with a degree of straightness which can offer effects that there may be no need to use the cutting device, or a worker can easily perform cutting by hands, or it is possible to suppress a decrease in finish quality.

In the first embodiment, the cutting line **900** has a shape of a straight line extending along the lengthwise direction of the separator **42.** Additionally, the cutting line **900** may have a shape of a straight line extending along any of sides of the glass panel unit **10.** In the first embodiment, the separator **42** has the lengthwise direction along a side of the glass panel unit **10,** and therefore the cutting line **900** has a shape of a straight line which extends along both the lengthwise direction of the separator **42** and the side of the glass panel unit **10.**

Note that, the completed assembly **110** is cut to remove the unnecessary part **11.** In connection with this, when the closing part **422** extends from the wall part **421** toward the unnecessary part **11,** the unnecessary part **11** may include useless part of the closing part **422** which does not contribute to separating the first space **510** from the second space **520.** Therefore, it is possible to reduce an amount of the useless part of the closing part **422** left in the glass panel unit **10.**

Through the aforementioned preparation step, assembling step, hermetically enclosing step, and removing step, the glass panel unit **10** is produced.

The method for manufacturing the glass panel unit **10** of the aforementioned first embodiment includes the assembling step, the hermetically enclosing step, and the removing step. The assembling step is a step of preparing the temporary assembly **100.** The temporary assembly **100** includes the first glass substrate **200,** the second glass substrate **300,** the frame **410,** the inside space **500,** the partition **420,** the gas passage **600,** and the outlet **700.** The second glass substrate **300** is placed opposite the first glass substrate **200.** The frame **410** is placed between the first glass substrate **200** and the second glass substrate **300** to hermetically bond the first glass substrate **200** and the second glass substrate **300** to each other. The inside space **500** is enclosed by the first glass substrate **200,** the second glass substrate **300,** and the frame **410.** The partition **420** divides the inside space **500** into the first space **510** and the second space **520.** The gas passage **600** is formed inside the inside space **500** to interconnect the first space **510** and the second space **520.** The outlet **700** interconnects the second space **520** and the outside space. The hermetically enclosing step is a step of obtaining the completed assembly **110** by: converting the first space **510** into the evacuated space **50** by evacuating the first space **510** through the gas passage **600,** the second space **520,** and the outlet, and changing the shape of the partition **420** to close the gas passage **600** to form the separator **42** so that the part of the frame **410** corresponding to the evacuated space **50** and the separator **42** constitute the seal **40** hermetically bonding the first glass substrate **200** and the second glass substrate **300** so as to enclose the evacuated space **50.** The removing step is a step of removing the part **11** including the second space **520** from the completed assembly **110** by cutting the completed assembly **110** along the straight line to obtain the glass panel unit **10** which is the predetermined part including the evacuated space **50.**

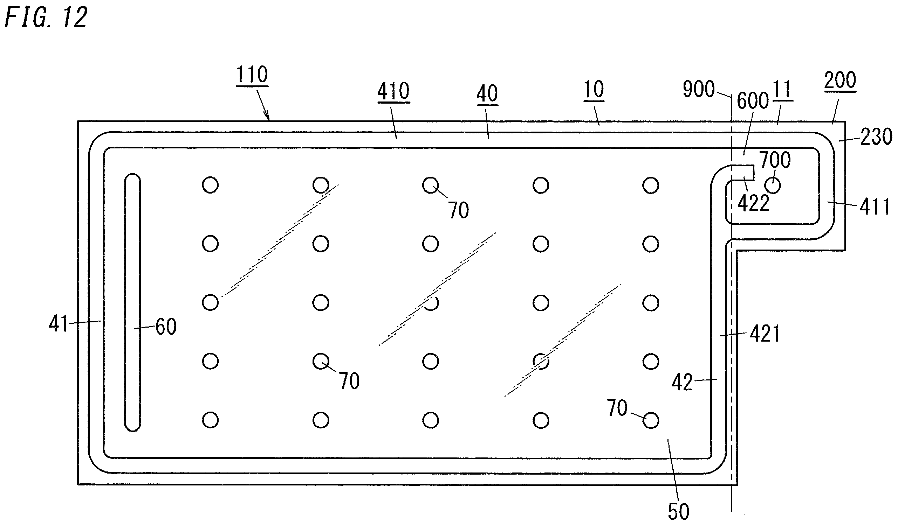

Hereinafter, the second embodiment is described with reference to **FIG. 12****.** Note that, most of components of the second embodiment are same as those of the first embodiment. Mainly, different components are described while the same components are not described.

The glass panel unit **10** is obtained by removing the unnecessary part **11** including the second space **520,** from the completed assembly **110.** If the number of unnecessary parts **11** is increased, yield rates of materials may decrease. If the unnecessary parts **11** is large, a length necessary for cutting the completed assembly **110** may increase. Thus, cutting may become troublesome and take more time. In consideration of these situations, in the second embodiment, in advance, portions of the first glass substrate **200** and the second glass substrate **300** which constitute the unnecessary parts **11** including the second space **520** are formed smaller than the glass panel unit **10** which is the predetermined part including the evacuated space **50.**

Before cut from the completed assembly **100,** the unnecessary part **11** is connected to the glass panel unit **10** at a length shorter than an entire length of a side (a shorter side in the second embodiment) of the glass panel unit **10.**

As described above, the unnecessary part **11** is formed smaller than the glass panel unit **10,** and thereby the number and/or sizes of waste parts can be reduced and the yield rates can be increased. Consequently, the production cost can be lowered.

Further, a length of the part cut from the completed assembly **110** along the straight line is shorter than a side of the predetermined part including the evacuated space **50.** Therefore, a length necessary for cutting becomes shorter. Consequently, it is possible to suppress the cutting from becoming troublesome and taking more time.

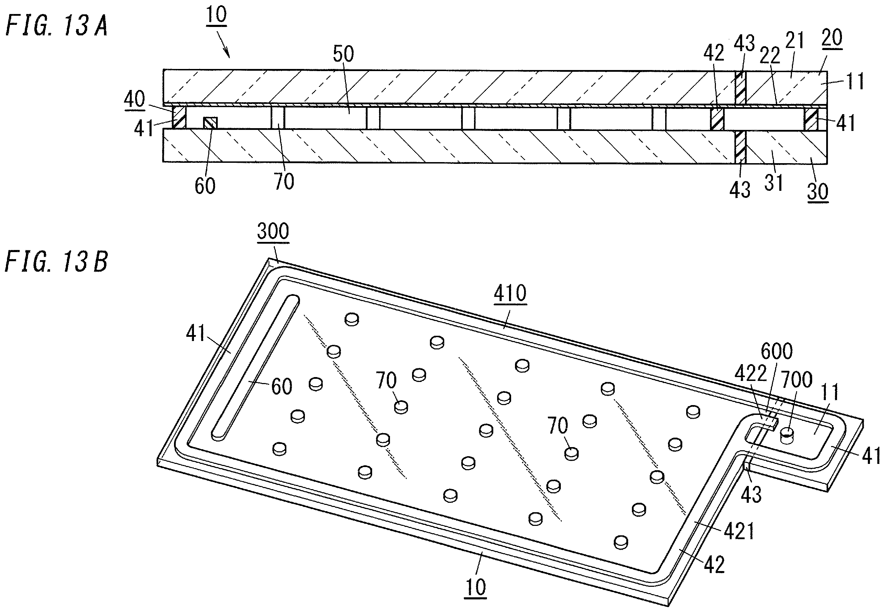

Hereinafter, the third embodiment is described with reference to **FIG. 13A** and **FIG. 13B****.** Note that, most of components of the third embodiment are same as those of the second embodiment. Mainly, different components are described while the same components are not described.

In the third embodiment, similarly to the second embodiment, in advance, portions of the first glass substrate **200** and the second glass substrate **300** which constitute the unnecessary parts **11** including the second space **520** are formed smaller than the glass panel unit **10** which is the predetermined part including the evacuated space **50.**

In the third embodiment, differently from the second embodiment, portions of the first glass substrate **200** and the second glass substrate **300** corresponding to the unnecessary part **11** are formed separately from portions of the first glass substrate **200** and the second glass substrate **300** corresponding to the glass panel unit **10,** and are bonded thereto with adhesive **43.** The adhesive **43** may be thermal adhesive. Examples of the thermal adhesive may include glass frit. Examples of the glass frit may include low-melting-point glass frit. Examples of the low-melting-point glass frit may include bismuth-based glass frit, lead-based glass frit, and vanadium-based glass frit. The adhesive **43** may be same as the first thermal adhesive and the second thermal adhesive, or may be adhesive other than thermal adhesive.

As described above, the unnecessary part **11** is formed smaller than the glass panel unit **10,** and thereby the number and/or sizes of waste parts can be reduced and the yield rates can be increased. Consequently, the production cost can be lowered.

Additionally, in the third embodiment, the unnecessary part **11** can be removed from the completed assembly **110** by cutting the completed assembly **110** at the adhesive **43.** In this regard, the completed assembly **110** is cut at the adhesive **43** by bending it by inclining the unnecessary part **11** relative to the part serving as the glass panel unit **10.** Therefore, the completed assembly **110** is easily cut compared with a case of using a cutting blade.

In the above embodiment (that is, any of the first embodiment to the third embodiment, used in the same meaning hereinafter), the glass panel unit **(10)** is rectangular, but the glass panel unit **(10)** may have a desired shape such as a circular shape and a polygonal shape. Stated differently, each of the first glass panel **(20),** the second glass panel **(30),** and the seal **(40)** may not be rectangular and may have a desired shape such as a circular shape and a polygonal shape. Note that, the shapes of the first glass substrate **(200),** the second glass substrate **(300),** the frame **(410),** and, the separator **(42)** may not be limited to the shapes described in the explanation of the above embodiment, and may have such shapes that the glass panel unit **(10)** can have a desired shape. Note that, the shape and size of the glass panel unit **(10)** may be determined in consideration of application of the glass panel unit **(10).**

Additionally, the first face and the second face, of the body **(21)** of the first glass panel **(20)** may not be limited to flat faces. Similarly, the first face and the second face, of the body **(31)** of the second glass panel **(30)** may not be limited to flat faces.

Additionally, the body **(21)** of the first glass panel **(20)** and the body **(31)** of the second glass panel **(30)** may not have the same plan shape and plan size. Further, the body **(21)** and the body **(31)** may not have the same thickness. Furthermore, the body **(21)** and the body **(31)** may not be made of the same material. Similarly, the glass plate **(210)** of the first glass substrate (200) and the glass plate **(310)** of the second glass substrate **(300)** may not have the same plan shape and plan size. Further, the glass plate **(210)** and the glass plate **(310)** may not have the same thickness. Furthermore, the glass plate **(210)** and the glass plate **(310)** may not be made of the same material.

Additionally, the seal **(40)** may not have the same plan shape with the first glass panel **(20)** and the second glass panel **(30).** Similarly, the frame **(410)** may not have the same plan shape with the first glass substrate **(200)** and the second glass substrate **(300).**

Additionally, the first glass panel **(20)** may include a coating which has desired physical properties and is formed on the second face of the body **(21).** Alternatively, the first glass panel **(20)** may not include the coating **(22).** In other words, the first glass panel **(20)** may be constituted by the body **(21)** only.

Additionally, the second glass panel **(30)** may include a coating with desired physical properties. For example, the coating may include at least one of thin films formed on the first face and the second face of the body **(31)** respectively. Examples of the coating may include a film reflective for light with a specified wavelength (for example, infrared reflective film and ultraviolet reflective film).

In the above embodiment, the frame **(410)** is made of the first thermal adhesive. However, the frame **(410)** may include other component such as a core, in addition to the first thermal adhesive. Stated differently, it is sufficient that the frame **(410)** includes the first thermal adhesive. In the above embodiment, the frame **(410)** is formed to surround an almost entire region on the second glass substrate **(300).** However, it is sufficient that the frame **(410)** is formed to surround a predetermined region on the second glass substrate **(300).** In other words, there is no need to form the frame **(410)** so as to surround an almost entire region on the second glass substrate **(300).** Alternatively, the completed assembly **(110)** may include two or more frames **(410).** In other words, the completed assembly **(110)** may include two or more inside spaces **(500).** In this case, it is possible to produce two or more glass panel units **(10)** from one completed assembly **(110).**

In the above embodiment, the partition **(420)** is made of the second thermal adhesive. However, the partition **(420)** may include other component such as a core, in addition to the second thermal adhesive. Stated differently, it is sufficient that the partition **(420)** includes the second thermal adhesive. Further, in the above embodiment, the partition **(420)** has its opposite end not connected to the frame **(410).** And, gaps between the opposite ends of the partition **(420)** and the frame **(410)** define the gas passages **(610, 620).** However, the partition **(420)** may have only one of its opposite ends not connected to the frame **(410).** In this case, there is one gas passage **(600)** between the partition **(420)** and the frame **(410).** Alternatively, the partition **(420)** may have its opposite end both connected to the frame **(410).** In this case, the gas passage **(600)** may be a through hole formed in the partition **(420).** Alternatively, the gas passage **(600)** may be a gap between the partition **(420)** and the first glass substrate **(200).** Alternatively, the partition **(420)** may be defined as a set of two or more partitions spaced from each other. In this case, the gas passage **(600)** may be a gap between adjacent two of the two or more partitions.

In the above embodiment, the inside space **(500)** is divided into one first space **(510)** and one second space **(520).** Note that, the inside space **(500)** may be divided into one or more first spaces **(510)** and one or more second spaces **(520).** When the inside space **(500)** includes two or more first spaces **(510),** it is possible to produce two or more glass panel units **(10)** from one completed assembly **(110).**

In the above embodiment, the second thermal adhesive is identical to the first thermal adhesive, and the second softening point is equal to the first softening point. However, the second thermal adhesive may be different material from the first thermal adhesive. For example, the second thermal adhesive may have the second softening point different from the first softening point of the first thermal adhesive. In such a case, the second softening point may be preferably higher than the first softening point. In this case, the first melting temperature **Tm1** can be set to be equal to or higher than the first softening point and lower than the second softening point. By doing so, it is possible to suppress undesired deformation of the partition **420** in the first melting step.

Additionally, each of the first thermal adhesive and the second thermal adhesive may not be limited to glass frit, but may be selected from low-melting-point metal, hot-melt adhesive, and the like, for example.

In the above embodiment, a furnace is used to heat the frame **(410),** the gas adsorbent **(60),** and the partition **(420).** However, such heating can be done with appropriate heating means. Examples of the heating means may include a laser and a thermally conductive plate connected to a heat source.

In the above embodiment, the gas passage **(600)** includes the two gas passages **(610, 620).** However, the gas passage **(600)** may include only one gas passage or may include three or more gas passages. Further, the shape of the gas passage **(600)** may not be limited in particular.

In the above embodiment, the outlet **(700)** is formed in the second glass substrate **(300).** However, the outlet **(700)** may be formed in the glass plate **(210)** of the first glass substrate **(200)** or may be formed in the frame **(410).** In summary, the outlet **(700)** may be allowed to be formed in the unnecessary part **(11).**

In the above embodiment, the getter of the gas adsorbent **(60)** is an evaporative getter. However, the getter may be a non-evaporative getter. When the non-evaporative getter has a temperature equal to or higher than a predetermined temperature (the activation temperature), adsorbed molecules intrudes into an inside of the getter, and thus the adsorbability can be recovered. In contrast to the evaporative getter, the adsorbed molecules are not desorbed. Therefore, after the non-evaporative getter has adsorbed an amount of molecules equal to or more than a certain amount, the adsorbability is no longer recovered even if the getter is heated up to a temperature equal to or higher than the activation temperature.

In the above embodiment, the gas adsorbent **(60)** has an elongated shape, but may have another shape. Additionally, the gas adsorbent **(60)** may not be necessarily positioned at the end of the evacuated space **(50).** Further, in the above embodiment, the gas adsorbent **(60)** may be formed by applying a solution where a powder of the getter is dispersed. However, the gas adsorbent **(60)** may include a substrate and the getter fixed to the substrate. This type of the gas adsorbent **(60)** may be formed by immersing a substrate in a solution where a powder of the getter is dispersed, and then drying it. Note that, the substrate may have a desired shape, but may be an elongated rectangular shape, for example.

Alternatively, the gas adsorbent **(60)** may be a film formed entirely or partially on the surface (first face) of the glass plate **(310)** of the second glass substrate **(300).** This type of the gas adsorbent **(60)** may be formed by coating the surface (first face) of the glass plate **(310)** of the second glass substrate **(300)** with a solution where a powder of the getter is dispersed.

Alternatively, the gas adsorbent **(60)** may be included in the spacer **(70).** For example, the spacer **(70)** may be made of material containing the getter, and thereby the spacer **(70)** including the gas adsorbent **(60)** can be obtained.

Alternatively, the gas adsorbent **(60)** may be solid material made of the getter. This gas adsorbent **(60)** tends to have a large size, and thus cannot be placed between the first glass substrate **(200)** and the second glass substrate **(300)** in some cases. In such cases, the glass plate **(310)** of the second glass substrate **(300)** may be formed to include a recess, and the gas adsorbent **(60)** may be placed in this recess.

Alternatively, the gas adsorbent **(60)** may be preliminarily placed in a package to suppress the getter from adsorbing molecules. In this case, the package may be broken after the second melting step to expose the gas adsorbent **(60)** to the evacuated space **(50).**

In the above embodiment, the glass panel unit **(10)** includes the multiple spacers **(70).** However, the glass panel unit **(10)** may include a single spacer **(70).** Alternatively, the glass panel unit **(10)** may not include any spacer **(70).**

As obviously derived from the aforementioned embodiments and modifications, the method for manufacturing glass panel unit **(10),** of the first aspect according to the present invention includes: an assembling step of preparing a temporary assembly **(100)** including: a first glass substrate **(200);** a second glass substrate **(300)** placed opposite the first glass substrate **(200);** a frame **(410)** placed between the first glass substrate **(200)** and the second glass substrate **(300)** to hermetically bond the first glass substrate **(200)** and the second glass substrate **(300)** to each other; an inside space **(500)** enclosed by the first glass substrate **(200),** the second glass substrate **(300),** and the frame **(410);** a partition **(420)** dividing the inside space **(500)** into a first space **(510)** and a second space **(520);** a gas passage **(600)** interconnecting the first space **(510)** and the second space **(520);** and an outlet **(700)** interconnecting the second space **(520)** and an outside space; a hermetically enclosing step of obtaining a completed assembly **(110)** by: converting the first space **(510)** into an evacuated space **(50)** by evacuating the first space **(510)** through the gas passage **(600),** the second space **(520),** and the outlet **(700)** and changing a shape of the partition **(420)** to close the gas passage **(600)** to form a separator **(42)** so that part of the frame **(410)** corresponding to the evacuated space **(50)** and the separator **(42)** constitute a seal **(40)** hermetically bonding the first glass substrate **(200)** and the second glass substrate **(300)** so as to enclose the evacuated space **(50);** and a removing step of removing part including the second space **(520)** from the completed assembly **(110)** by cutting the completed assembly **(110)** along a straight line to obtain a glass panel unit which is a predetermined part **(10)** including the evacuated space **(50).**

According to the first aspect, it is possible to obtain the glass panel unit **(10)** which does not have the outlet **(700)** and an evacuation pipe **(810)** but has improved thermal insulating properties.

The method for manufacturing the glass panel unit **(10),** of the second aspect according to the present invention would be realized in combination with the first aspect. In the method for manufacturing the glass panel unit **(10)** of the second aspect, the gas passage **(600)** is formed between an end of the partition **(420)** and the frame **(410),** the end extending in a direction across a lengthwise direction of the partition **(420).** According to the second aspect, in application of material of the partition **(420)** on the second glass substrate **(300)** with a dispenser, there may be no need to stop ejection of the material of the partition **(420)** from the dispenser at a distance corresponding to the length of the gas passage **(600)** from the frame **(410).** Therefore, low accuracy may suffice for ejection control of the material of the partition **(420)** from the dispenser, and thus such control can be done easily.

The method for manufacturing the glass panel unit **(10),** of the third aspect according to the present invention would be realized in combination with the first or second aspect. In the method for manufacturing the glass panel unit **(10)** of the third aspect, a plurality of the gas passages **(600)** is formed.

According to the third aspect, time necessary for evacuation can be shortened.

The method for manufacturing the glass panel unit **(10),** of the fourth aspect according to the present invention would be realized in combination with any one of the first to third aspects. In the method for manufacturing the glass panel unit **(10)** of the fourth aspect, the part including the second space **(520)** is smaller than the predetermined part **(10)** including the evacuated space **(50),** and a length of the part cut from the completed assembly **(110)** along the straight line is shorter than a side of the predetermined part **(10)** including the evacuated space **(50).**

According to the fourth aspect, the unnecessary part **(11)** is formed smaller than the glass panel unit **(10).** Thereby, the number and/or sizes of waste parts can be reduced and the yield rates can be increased. Consequently, the production cost can be lowered.

The method for manufacturing the glass panel unit **(10),** of the fifth aspect according to the present invention would be realized in combination with the fourth aspect. In the method for manufacturing the glass panel unit **(10)** of the fifth aspect, portions of the first glass substrate **(200)** and the second glass substrate **(300)** corresponding to the part including the second space **(520)** are bonded with adhesive **(43)** to other portions of the first glass substrate **(200)** and the second glass substrate **(300)** corresponding to the predetermined part **(10)** including the evacuated space **(50).**

According to the fifth aspect, the unnecessary part **(11)** is removed by cutting at the adhesive **(43).** Therefore, cutting can be facilitated compared with a case of cutting the first glass substrate **(200)** and the second glass substrate **(300).**

## Claims

1. A method for manufacturing glass panel unit (10), comprising:
an assembling step of preparing a temporary assembly (100) including: a first glass substrate (200); a second glass substrate (300) placed opposite the first glass substrate (200); a frame (410) placed between the first glass substrate (200) and the second glass substrate (300) to hermetically bond the first glass substrate (200) and the second glass substrate (300) to each other; an inside space (500) enclosed by the first glass substrate (200), the second glass substrate (300), and the frame (410); a partition (420) dividing the inside space (500) into a first space (510) and a second space (520); a gas passage (600) interconnecting the first space (510) and the second space (520); and an outlet (700) interconnecting the second space (520) and an outside space;
a hermetically enclosing step of obtaining a completed assembly (110) by: converting the first space (510) into an evacuated space (50) by evacuating the first space (510) through the gas passage (600), the second space (520), and the outlet (700) and changing a shape of the partition (420) to close the gas passage (600) to form a separator (42) so that part of the frame (410) corresponding to the evacuated space (50) and the separator (42) constitute a seal (40) hermetically bonding the first glass substrate (200) and the second glass substrate (300) so as to enclose the evacuated space (50); and
a removing step of removing part including the second space (520) from the completed assembly (110) by cutting the completed assembly (110) along only one straight line to obtain a glass panel unit (10) which is a predetermined part including the evacuated space (50).

2. The method for manufacturing glass panel unit (10), of claim 1, wherein
the gas passage (600) is formed between an end of the partition (420) and the frame (410), the end extending in a direction across a lengthwise direction of the partition (420).

3. The method for manufacturing glass panel unit (10), of claim 1 or 2, wherein
a plurality of the gas passages (600) is formed.

4. The method for manufacturing glass panel unit (10), of any one of claims 1 to 3,
wherein
the part including the second space (520) is smaller than the predetermined part including the evacuated space (50),
a length of the part cut from the completed assembly (110) along the straight line is shorter than a side of the predetermined part including the evacuated space (50).

5. The method for manufacturing glass panel unit (10), of claim 4, wherein portions of the first glass substrate (200) and the second glass substrate (300) corresponding to the part including the second space (520) are bonded with adhesive to other portions of the first glass substrate (200) and the second glass substrate (300) corresponding to the predetermined part including the evacuated space (50).

## Patentansprüche

1. Verfahren zur Herstellung einer Glasscheibeneinheit (10), umfassend:
einen Anordnungsschritt zum Bereitstellen einer temporären Anordnung (100), einschließend: ein erstes Glassubstrat (200); ein zweites Glassubstrat (300), das gegenüber dem ersten Glassubstrat (200) angeordnet ist; einen Rahmen (410), der zwischen dem ersten Glassubstrat (200) und dem zweiten Glassubstrat (300) angeordnet ist, um das erste Glassubstrat (200) und das zweite Glassubstrat (300) hermetisch miteinander zu verbinden; einen Innenraum (500), der von dem ersten Glassubstrat (200), dem zweiten Glassubstrat (300) und dem Rahmen (410) umschlossen ist; eine Trennwand (420), die den Innenraum (500) in einen ersten Raum (510) und einen zweiten Raum (520) unterteilt; einen Gasdurchlass (600), der den ersten Raum (510) und den zweiten Raum (520) miteinander verbindet; und einen Auslass (700), der den zweiten Raum (520) und einen Außenraum miteinander verbindet;
einen hermetisch umschließenden Schritt des Erhaltens einer fertigen Anordnung (110) durch: das Umwandeln des ersten Raums (510) in einen evakuierten Raum (50) durch das Evakuieren des ersten Raums (510) durch den Gasdurchlass (600), den zweiten Raum (520) und den Auslass (700) und
das Ändern einer Form der Trennwand (420), um den Gasdurchlass (600) zu schließen, um einen Separator (42) zu bilden, so dass ein Teil des Rahmens (410), der dem evakuierten Raum (50) entspricht, und der Separator (42) eine Dichtung (40) bilden, die das erste Glassubstrat (200) und das zweite Glassubstrat (300) hermetisch verbindet, um den evakuierten Raum (50) zu umschließen; und
einen Entfernungsschritt des Entfernens eines Teils, der den zweiten Raum (520) einschließt, von der fertigen Anordnung (110) durch das Schneiden der fertigen Anordnung (110) entlang nur einer geraden Linie, um eine Glasscheibeneinheit (10) zu erhalten, die ein vorbestimmter Teil ist, der den evakuierten Raum (50) einschließt.

2. Verfahren zur Herstellung einer Glasscheibeneinheit (10) nach Anspruch 1, wobei
der Gasdurchlass (600) zwischen einem Ende der Trennwand (420) und dem Rahmen (410) gebildet ist, wobei sich das Ende in einer Richtung über eine Längsrichtung der Trennwand (420) erstreckt.

3. Verfahren zur Herstellung einer Glasscheibeneinheit (10) nach Anspruch 1 oder 2, wobei
eine Vielzahl der Gasdurchlässe (600) gebildet wird.

4. Verfahren zur Herstellung einer Glasscheibeneinheit (10) nach einem der Ansprüche 1 bis 3, wobei
der den zweiten Raum (520) einschließende Teil kleiner ist als der vorbestimmte Teil, der den evakuierten Raum (50) einschließt,
eine Länge des aus der fertigen Anordnung (110) entlang der geraden Linie geschnittenen Teils kürzer ist als eine Seite des vorbestimmten Teils, der den evakuierten Raum (50) einschließt.

5. Verfahren zur Herstellung einer Glasscheibeneinheit (10) nach Anspruch 4, wobei
Teile des ersten Glassubstrats (200) und des zweiten Glassubstrats (300), die dem Teil entsprechen, der den zweiten Raum (520) einschließt, mit einem Haftmittel mit anderen Teilen des ersten Glassubstrats (200) und des zweiten Glassubstrats (300), die dem vorbestimmten Teil entsprechen, der den evakuierten Raum (50) einschließt, verbunden sind.

## Revendications

1. Procédé de fabrication d'une unité de panneau de verre (10) comprenant:
une étape d'assemblage où l'on prépare un assemblage provisoire (100) comprenant: un premier substrat de verre (200); un deuxième substrat de verre (300) placé en face du premier substrat de verre (200); un cadre (410) placé entre le premier substrat de verre (200) et le deuxième substrat de verre (300) pour coller hermétiquement le premier substrat de verre (200) et le deuxième substrat de verre (300) l'un à l'autre; un espace intérieur (500) enfermé par le premier substrat de verre (200), le deuxième substrat de verre (300) et le cadre (410); une séparation (420) divisant l'espace intérieur (500) en un premier espace (510) et un deuxième espace (520); un passage de gaz (600) reliant le premier espace (510) et le deuxième espace (520); et une sortie (700) reliant le deuxième espace (520) et un espace extérieur;
une étape de fermeture hermétique où l'on obtient un assemblage achevé (110) en: transformant le premier espace (510) en un espace sous vide (50) par mise sous vide du premier espace (510) par le passage de gaz (600), le deuxième espace (520) et la sortie (700) et en modifiant la forme de la séparation (420) pour fermer le passage de gaz (600) en vue de former un séparateur (42) de sorte qu'une partie du cadre (410) correspondant à l'espace sous vide (50) et
au séparateur (42) forme un joint (40) collant hermétiquement le premier substrat de verre (200) et le deuxième substrat de verre (300) de manière à enfermer l'espace sous vide (50); et
une étape où l'on enlève la partie comprenant le deuxième espace (520) de l'assemblage achevé (110) en découpant l'assemblage achevé (110) le long seulement d'une ligne droite pour obtenir une unité de panneau de verre (10), qui est une partie prédéterminée comprenant l'espace sous vide (50).

2. Procédé de fabrication d'une unité de panneau de verre (10) selon la revendication 1, dans lequel le passage de gaz (600) est formé entre une extrémité de la séparation (420) et le cadre (410), l'extrémité s'étendant dans une direction à travers un sens longitudinal de la séparation (420).

3. Procédé de fabrication d'une unité de panneau de verre (10) selon la revendication 1 ou 2, dans lequel est formée une pluralité de passages de gaz (600).

4. Procédé de fabrication d'une unité de panneau de verre (10) selon l'une quelconque des revendications 1 à 3, dans lequel
la partie comprenant le deuxième espace (520) est plus petite que la partie prédéterminée comprenant l'espace sous vide (50),
une longueur de la partie découpée de l'assemblage achevé (110) le long de la ligne droite est plus courte qu'un côté de la partie prédéterminée comprenant l'espace sous vide (50).

5. Procédé de fabrication d'une unité de panneau de verre (10) selon la revendication 4, dans lequel
des parties du premier substrat de verre (200) et du deuxième substrat de verre (300) correspondant à la partie comprenant le deuxième espace (520) sont collées avec un adhésif à d'autres parties du premier substrat de verre (200) et du deuxième substrat de verre (300) correspondant à la partie prédéterminée comprenant l'espace sous vide (50).
